# DEMANDE DE BREVET EUROPEEN

(11) **EP 1 578 152 A1**
(43) Date de publication de la demande: **21.09.2005**
(21) Numéro de dépôt: 04290729.5
(22) Date de dépôt: 17.03.2004
(51) Int. Cl.: H04Q 7/28, H04Q 7/30

(54) **Procédé, serveur et système de gestion d'une session "push-to-talk"**

(71) Demandeur: FRANCE TELECOM, 75015 Paris (FR)
(72) Inventeur: Pichelin, Aude, 75015 Paris (FR); Beziot, Nathalie, 92350 Le Plessis Robinson (FR); Daoud-Triki, Khadija, 92130 Issy les Moulineaux (FR)
(74) Mandataire: de la Bigne, Guillaume Michel Marie

(57) **Abrégé**

Un procédé, un serveur et un système de gestion d'une session en mode talkie walkie (« push to talk ») entre une pluralité de terminaux, ayant chacun des capacités respectives de codage et de décodage de signaux de parole et/ou d'images. La session connecte la pluralité de terminaux via un serveur, au travers d'un premier réseau de télécommunication sans fil auquel sont connectés les terminaux et d'un deuxième réseau auquel est connecté le serveur. Le serveur comprend un codeur/décodeur de données. Après établissement d'une session à la demande de l'un des terminaux, un terminal émetteur émet des données codées selon un type de codage initial vers un ou plusieurs autres terminaux récepteurs connectés via le serveur. Puis le serveur recevant les données codées selon le type de codage initial, les traite en fonction des capacités respectives des terminaux récepteurs pour assurer une compatibilité entre les données codées selon le type de codage initial et les données reçues par les terminaux récepteurs, le cas échéant selon au moins un type de codage différent du type de codage initial. Le serveur transmet ensuite les données traitées aux terminaux récepteurs.

## Description

La présente invention est relative au domaine des télécommunications et, plus précisément, aux services de communication de type talkie walkie utilisant des réseaux de télécommunication sans fil. Ces services sont communément désignés par les termes anglais « push to talk ».

Un service de 'push to talk' dans un réseau de télécommunication sans fil propose à ses abonnés de communiquer selon le principe bien connu du talkie walkie. Ainsi, un premier abonné peut être en communication immédiate en mode talkie walkie avec une liste d'un ou plusieurs abonnés, prérépertoriés simplement en pressant un bouton de son terminal. De leur côté, les autres abonnés entendent sur leur terminal la voix du premier abonné sans avoir à actionner aucune touche.

Ainsi, avec le service 'push to talk', des abonnés d'un réseau mobile peuvent entrer en contact avec un groupe de personnes, instantanément, sans même composer un numéro de téléphone. Les utilisateurs ont la possibilité d'envoyer des messages à un ou plusieurs terminaux récepteurs participant à la session, de manière simultanée. Classiquement, il leur suffit de sélectionner un ou plusieurs interlocuteurs à partir d'une liste affichée sur l'écran de leur terminal et d'appuyer sur une touche pour leur transmettre une information. Le terminal devient un téléphone transformé ainsi en talkie-walkie.

Une session de 'push to talk' est donc initiée très simplement par un terminal initiateur vers un ou plusieurs terminaux sollicités pour participer à la session, ces derniers étant référencés dans les sections suivantes par les termes 'terminaux participants'. Après quelques étapes qui seront décrites ci-dessous, la session est établie entre le terminal initiateur et des terminaux participants. Un seul terminal parmi les terminaux de la session est autorisé à émettre à la fois, une autorisation d'émettre pouvant être attribuée à un terminal sur demande de ce dernier, un terminal autorisé à émettre étant désigné par les termes « terminal émetteur ». Les autres terminaux de la session reçoivent des données du terminal émetteur et sont référencés dans les sections suivantes par les termes 'terminaux récepteurs'.

Généralement, les terminaux récepteurs connectés sont classiquement avertis par un bip et reçoivent immédiatement après ce bip l'information envoyée par le terminal émetteur.

Les données envoyées dans une session de 'push to talk' peuvent être par exemple des données vocales ou, dans une réalisation en cours, des données d'images, notamment vidéo.

La simplicité et le faible coût d'une communication 'push to talk' permet aux opérateurs d'offrir un service très attractif et très pratique pour des professionnels tels que les chauffeurs de taxi par exemple. D'autres domaines d'application sont les activités récréatives et ludiques en famille ou entre amis dans des lieus étendus tels que des pistes de ski ou des parcs d'attraction.

Le service 'push to talk' est contrôlé par un serveur communément appelé serveur 'push to talk'. Ce serveur joue un rôle à la fois dans l'établissement de la session 'push to talk', dans l'attribution d'une autorisation d'émettre et dans la transmission des données émises par un terminal émetteur vers les terminaux récepteurs.

Toutefois, la gestion d'une session en mode talkie walkie entre une pluralité de terminaux, ayant chacun des capacités respectives de codage et de décodage de signaux de parole et/ou d'images, ladite session connectant ladite pluralité de terminaux via un serveur, au travers d'un premier réseau de télécommunication sans fil auquel sont connectés les terminaux et un deuxième réseau auquel est connecté le serveur, pose actuellement des problèmes.

Dans un tel contexte, en effet, les paramètres définissant certains aspects de la session en cours d'établissement, et notamment le type de codage à utiliser pour l'émission de données, sont négociés avec un premier terminal appelé. Par conséquent, le terminal initiateur code des données à transmettre selon un type de codage déterminé en fonction des capacités de codage et de décodage qu'il a en commun avec le premier terminal qui a répondu à l'établissement de la session. Dans le cas où plusieurs terminaux sont sollicités pour participer à la session, il est de ce fait possible qu'un deuxième terminal parmi les terminaux sollicités n'ait pas des capacités de codage et de décodage lui permettant de décoder les données émises par le terminal initiateur. Dans ce cas, ce deuxième terminal ne peut pas décoder les informations reçues.

Par ailleurs, lorsqu'un terminal participant est autorisé à émettre, il est possible qu'il utilise également un codage incompatible avec les autres terminaux connectés.

Un inconvénient apparaît aussi lorsqu'un nouveau participant se connecte à une session déjà établie. En effet, dans ce cas là, les terminaux déjà connectés à la session n'ont pas la connaissance des capacités de codage et de décodage du nouveau terminal participant. Il est possible de ce fait que les terminaux déjà connectés utilisent des types de codages incompatibles avec les capacités de codage et de décodage du nouveau terminal participant.

La présente invention vient améliorer la situation.

Un premier aspect de l'invention propose un procédé de gestion d'une session en mode talkie walkie (« push to talk ») entre une pluralité de terminaux, ayant chacun des capacités respectives de codage et de décodage de signaux de parole et/ou d'images, ladite session connectant ladite pluralité de terminaux via un serveur, au travers d'un premier réseau de télécommunication sans fil auquel sont connectés les terminaux et d'un deuxième réseau auquel est connecté le serveur,
dans lequel le serveur comprend un codeur/décodeur de données, et
dans lequel, après établissement d'une session à la demande de l'un des terminaux:
- un terminal émetteur émet des données codées selon un type de codage initial vers un ou plusieurs autres terminaux récepteurs connectés via le serveur ;
- le serveur reçoit lesdites données codées selon ledit type de codage initial ;
- le serveur traite lesdites données en fonction desdites capacités respectives desdits terminaux récepteurs pour assurer une compatibilité entre les données codées selon ledit type de codage initial et les données reçues par les terminaux récepteurs, le cas échéant selon au moins un type de codage différent du type de codage initial ;
- le serveur transmet lesdites données traitées aux terminaux récepteurs.

Un second aspect de l'invention propose un serveur pour gérer une session en mode talkie walkie ("push to talk") comprenant des moyens pour mettre en oeuvre un procédé selon le premier aspect.

Un troisième aspect de l'invention propose un système de gestion d'une session en mode talkie walkie ("push to talk") comprenant des moyens pour mettre en oeuvre un procédé selon le premier aspect.

Grâce à ces dispositions, un réseau UMTS peut offrir un service de 'push to talk' adaptatif aux capacités des terminaux.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre l'architecture d'un réseau IP multimédia de type IMS normalisée pour l'UMTS version 5 ;
- la figure 2 illustre un échange de messages pour l'établissement d'une session dans une architecture telle qu'illustrée dans la figure 2 ;
- la figure 3 représente une architecture de réseau pour la gestion d'une session de « push to talk » ;
- la figure 4 est une représentation de l'échange de messages entre les différents éléments du réseau pour la gestion d'une session de transmission de données 'push to talk' selon un mode de réalisation de l'invention.

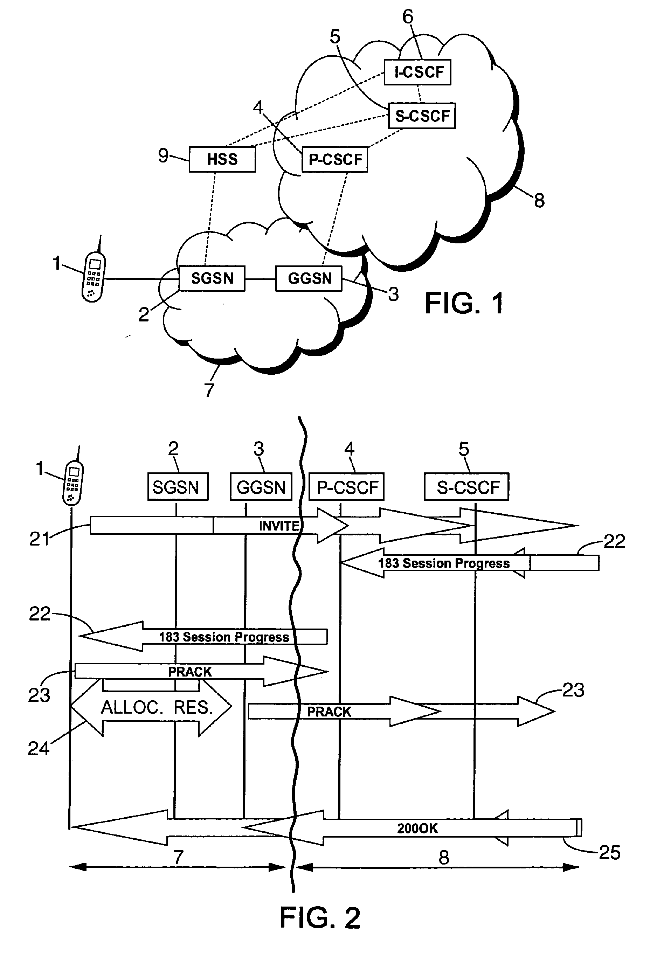

On décrit ci-après l'UMTS en version 5 qui introduit l'IMS (pour "Internet Protocol Multimedia Subsystem"). Une grande évolution apportée à cette architecture vient de la corrélation entre le domaine de commutation de paquet du réseau UMTS, portant la référence 7 sur la figure 1, en ce qui concerne le transport des données, et le réseau, portant la référence 8, basé sur un protocole de type IP (pour "Internet Protocol") avec des mécanismes de contrôle du transport.

On se réfère ici à la figure 1 pour décrire l'architecture d'un réseau IP multimedia de type IMS normalisée pour l'UMTS version 5. Le coeur de l'architecture IP pour l'UMTS en version 5, dite IMS (pour "Internet Protocol Multimedia Subsystem") est composé d'équipements CSCF (pour "Call State Control Functions") référencés 4, 5 et 6 qui permettent de contrôler les sessions multimédia dans le réseau de type IMS et interagissent avec d'autres entités du réseau de type IMS tels que des serveurs d'application. On distingue plusieurs types d'équipements CSCFs dans l'architecture de réseau de type IMS :
- les modules P-CSCFs (pour "Proxy-CSCFs"), portant la référence 4, qui sont les premiers points de contacts pour les terminaux dans l'IMS ; ces entités comprennent une fonction de contrôle des ressources de type PDF,
- les modules S-CSCFs (pour "Serving-CSCFs"), portant la référence 5, qui contrôlent les sessions d'un terminal pendant toute la période où ce dernier est enregistré dans l'IMS ;et
- les modules I-CSCFs (pour "Interrogating-CSCFs"), portant la référence 6, qui sont des points d'entrée pour un tel réseau 8 pour des sessions multimédia entre un utilisateur de ce réseau et un utilisateur appartenant à un autre réseau du même type.

L'élément de réseau 9, désigné par HSS (pour "Home Subscriber Server") est introduit dans l'UMTS Version 5, en tant que HLR (pour "Home Location Register") contenant en outre des fonctions relatives au domaine IP multimédia. En d'autre terme, l'élément de réseau HSS contient aussi la base de données des abonnés d'un domaine IP multimédia. Les S-CSCFs 5 ont une interface avec les éléments de réseau HSS 9.

Le protocole « Session Initiation Protocol » SIP est utilisé par les terminaux 1, les équipements de type CSCFs (portant les références 4, 5 et 6) et les serveurs d'application. Dans une telle architecture, une session SIP permet d'établir des sessions de transport de paquets pour des services multimédia. Les noeuds du domaine IP multimédia 8 et du domaine de commutation de paquets UMTS 7 sont liés de telle façon qu'il existe une corrélation entre la couche de transport qui fournit les ressources et la couche d'application qui contrôle les ressources fournies aux utilisateurs par la couche de transport. De ce fait, l'architecture d'un réseau IP multimédia de type IMS offre un contrôle des ressources. L'UMTS Version 5 normalise l'établissement d'une session de communication dans une telle architecture, notamment entre un terminal 1 du réseau UMTS 7, enregistré dans le réseau IP multimédia de type IMS portant la référence 8, et un autre terminal ou un serveur d'application enregistré dans un réseau IP.

Pour l'établissement d'une session dans le domaine IMS, un terminal utilise donc le protocole SIP. Il s'enregistre tout d'abord dans le domaine IMS afin, entre autres, de découvrir le module P-CSCF et le module S-CSCF qui gèrent cette session. Une fois que le terminal est enregistré dans le domaine IMS, il peut initier une session avec un ou plusieurs autres terminaux. Pour ce faire le terminal a recours à la procédure 'INVITE' comme l'illustre la figure 2.

La figure 2 détaille les échanges de messages entre les différentes entités du réseau UMTS et du réseau Internet. Un terminal 1, qui est un abonné du réseau UMTS de commutation de paquets 7 et de l'IMS, s'enregistrer dans le réseau Internet 8. Cette procédure, bien connue de l'homme du métier, ne sera pas décrite dans cette description. La description prend comme hypothèse que le terminal 1 est déjà enregistré au réseau 8. Le terminal est donc autorisé à établir une session de transmission de données. Pour ce faire, le terminal initie l'établissement d'une telle session par l'envoi d'un message 'INVITE' 21 selon le protocole SIP à l'élément de réseau SGSN 2. L'élément de réseau SGSN transmet ce message à l'élément de réseau GGSN 3, qui le transmet à l'élément de réseau P-CSCF 4. Ce dernier élément transmet ce message à l'élément de réseau S-CSCF 5 qui le transmet enfin à un destinataire qui peut être un serveur d'application ou un terminal. Ce message 21 comprend des paramètres demandés par le terminal 1 définissant certains aspects de la session en cours d'établissement. Les paramètres peuvent indiquer le type de media qui va être transmis au cours de cette session (par exemple vidéo, audio ou autre). Ils peuvent également indiquer les ports sur lesquels le terminal souhaite recevoir les données ainsi que les codeurs décodeurs qui seront utilisés, ces derniers pouvant être choisis par type de media ou encore d'autres paramètres caractérisant la session. Ces paramètres sont classiquement transmis dans le message SIP 'INVITE' 21 selon le protocole SDP.

Lorsque le destinataire reçoit ce message 'INVITE', ils comparent les paramètres demandés par le terminal 1 et ses propres capacités. De cette comparaison le destinataire en déduit des paramètres négociés qu'il envoie au terminal 1 dans un message '183 Session Progress' 22 selon le protocole SIP en réponse au message 21. Ce message 22 est transmis au terminal 1 via les éléments de réseau successifs S-CSCF, P-CSCF, GGSN et enfin SGSN.

Le terminal 1 envoie un message 'PRACK' 23 selon le protocole SIP en réponse au message '183 Session Progress' 22 selon le protocole SIP. Ce message 23 comprend les paramètres communs au destinataire et au terminal 1 initiateur.

Le terminal 1 demande ensuite à l'élément de réseau GGSN 3, la réservation des ressources de transmission 24 requises pour la session en cours d'établissement pour le transport des données au sein du réseau UMTS de commutation de paquet.

Enfin sur réception du message 'PRACK' 23 selon le protocole SIP, la session de transmission de données est établie. Un message '200 OK' 25 selon le protocole SIP en informe le terminal 1.

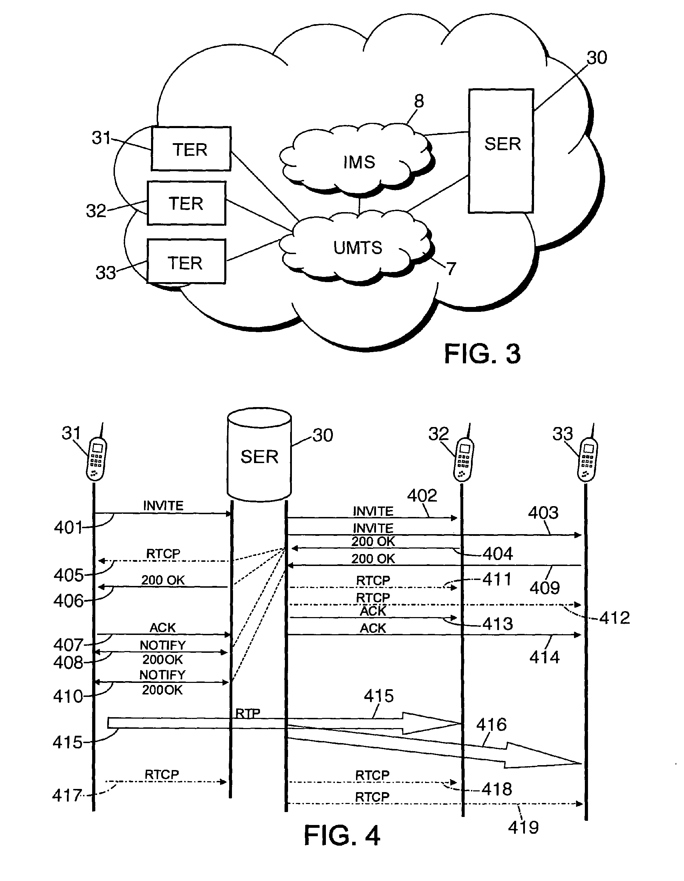

Selon un mode préféré de réalisation de la présente invention, l'architecture d'un service 'push to talk' dans un réseau UMTS est basée sur l'architecture IMS dont les principes ont été énoncés ci-dessus. Une telle architecture est décrite ci-après en référence à la figure 3.

En effet, sur la figure 3, un premier, un second et un troisième terminal, respectivement référencés 31, 32 et 33, sont connectés au réseau UMTS de commutation de paquet portant la référence 7. Un serveur 'push to talk' 30 est introduit dans le domaine IMS.

Un mode de réalisation de la présente invention introduit donc dans une architecture telle que décrite précédemment, un serveur 'push to talk' ayant la capacité d'établir des session de «'push to talk', et ayant en outre la capacité de gérer et d'adapter la transmission des données codées reçues d'un terminal étant autorisé à émettre vers chacun des terminaux récepteurs en fonction du codage des données reçues du terminal émetteur et des capacités respectives de codage et de décodage des terminaux récepteurs.

Afin de réaliser une telle adaptation dans la transmission des données, le serveur connaît de préférence les capacités de codage et de décodage de chacun des terminaux connectés à la session. Pour ce faire, le serveur mémorise les capacités respectives de codage et de décodage des terminaux connectés à la session au cours des échanges de messages entre les terminaux lors de l'établissement de la session comme cela est décrit en détail dans les sections suivantes. Toutefois, l'invention couvre toute autre façon, pour le serveur, de mémoriser les capacités respectives de codage et de décodage des terminaux connectés à la session.

Dans un mode de réalisation de l'invention, le serveur 'push to talk' comprend avantageusement des fonctions lui permettant de traiter, pour chacun des terminaux récepteurs, un paquet reçu pour en extraire les données utiles (en enlevant l'en-tête de transport) afin de déterminer si les données reçues sont codées de telle manière que le terminal récepteur respectif est capable de les décoder. Lorsque le serveur 'push to talk' détecte qu'un terminal récepteur n'a pas la capacité de décoder les données codées par l'émetteur, le serveur adapte le codage des données à transmettre en codant à nouveau les données de manière à ce que le terminal récepteur soit capable de les décoder.

Dans un mode préféré de réalisation de l'invention, le serveur 'push to talk' est avantageusement pourvu d'un codeur/décodeur adapté pour réaliser un codage adaptatif des données reçues en accord avec les capacités des terminaux impliqués dans la session de 'push to talk'.

A l'issue de ce codage adaptatif, le serveur 'push to talk' ajoute l'en-tête de transport pour chaque paquet de données recodées avant de transmettre ces données au terminal pour lequel le codage adaptatif a été réalisé.

Dans un mode de réalisation de l'invention ces codeurs/décodeurs sont des codeurs/décodeurs de type AMR (pour « Adaptive Multi Rate »). Un codeur/décodeur de type AMR se décline classiquement en 8 modes différents définissant des débits différents. Ainsi le terminal initiateur indique des modes AMR qu'il supporte dans les paramètres demandés. Les codeurs/décodeurs AMR sont indiqués à titre illustratif, l'invention couvrant bien entendu d'autres types de codeurs/décodeurs.

Dans un mode de réalisation de l'invention, on établie une session de 'push to talk' selon le protocole SIP et on gère l'attribution d'une autorisation d'émettre selon le protocole « Real Time Control Protocol » ou RTCP.

La figure 4 décrit un tel mode de réalisation de la présente invention.

Dans la figure 4, le terminal 31 initie la session de 'push to talk' par l'envoi d'un message 'INVITE' 401 selon le protocole SIP au serveur 'push to talk' 30. Ce message contient de préférence des paramètres pour le service 'push-to-talk', tels que par exemple les capacités de codage et de décodage du terminal initiateur (c'est-à-dire les codeurs décodeurs qui peuvent être utilisés par le terminal initiateur). Ces paramètres sont préférablement transmis selon le protocole SDP.

Le serveur 'push to talk' 30 transmet ce message 'INVITE' selon le protocole SIP aux terminaux 32, 33 participants à cette session 'push to talk' via les messages référencés 402 et 403.

Le serveur mémorise de préférence les capacités de codage et de décodage du terminal initiateur contenues dans ce message 'INVITE' 401.

Les terminaux participants 32, 33 répondent chacun au serveur 'push to talk' 30 par un message '200 OK' selon le protocole SIP référencé respectivement 404 et 409. Préférablement, ces messages '200 OK' 404, 409 contiennent également une description des types de media et des type de codage et de décodage supportés par les terminaux participants respectifs 32 et 33. Une telle description peut être transmise selon le protocole SDP.

De préférence, sur réception d'un messages '200 OK' selon le protocole SIP, le serveur mémorise les capacités de codage et de décodage relatives à ce terminal.

Par ailleurs, dès réception du premier message '200 OK' selon le protocole SIP, ce qui correspond au message '200 OK' 404 envoyé par le terminal participant 32, le serveur 30 envoie au terminal initiateur un message selon le protocole RTCP référencé 405 pour l'autoriser à émettre. Le serveur envoie ensuite un message '200 OK' 406 selon le protocole SIP au terminal initiateur 31 lui indiquant les capacités de codage et de décodage du premier terminal participant ayant répondu.

Ensuite le serveur envoie un message 411 selon le protocole RTCP au terminal participant 32, qui a répondu, pour lui indiquer que c'est le terminal 31 qui est autorisé à émettre.

L'autre terminal participant 33 répond au message 'INVITE' selon le protocole SIP en envoyant un message '200 OK' 409 selon le protocole SIP au serveur 'push to talk' 30, qui contient ses propres capacités de codage et de décodage. Le serveur 'push to talk' 30 mémorise les capacités de codage et de décodage du terminal participant 33 et renvoie un message 412 selon le protocole RTCP au terminal 33.

Ensuite, le terminal initiateur de la session 'push to talk' reçoit du serveur 'push to talk' 30 des messages de notifications 408 et 410 l'informant de la connexion des terminaux participants 32, 33.

Lorsque le terminal initiateur autorisé à émettre code les données à émettre, il sélectionne un type de codage initial parmi les types de codage qu'il a en commun avec le terminal participant 32 qui a répondu en premier au message 'INVITE' selon le protocole SIP et qui ont été indiqué dans le message de réponse '200 OK' 406 selon le protocole SIP reçu du serveur 'push to talk' 30. Puis le terminal initiateur émet les données codées 415.

L'émission de données est de préférence réalisée en utilisant le protocole « Real Time Protocol » ou RTP.

Le serveur reçoit le message des données codées 415 et traite ces données. En effet, le serveur contrôle la compatibilité des capacités respectives de terminaux récepteurs avec le type de codage initial utilisé par le terminal émetteur. Ce contrôle est réalisé sur la base des informations mémorisées relatives aux capacités de codage et de décodage des terminaux connectés.

A l'issue de ce contrôle, le serveur détecte que les capacités du terminal récepteur 32 sont compatibles avec le type de codage initial utilisé par le terminal émetteur 31. Ainsi, le serveur transmet les données codées 415 comme elles ont été reçues, c'est-à-dire codées selon le type de codage initial.

Par contre, le serveur détecte une incompatibilité entre les capacités de codage et de décodage du terminal récepteur 33 et le type de codage initial utilisé par le terminal émetteur 31. Par conséquent, le serveur opère de la façon suivante pour chaque paquet de données reçues :
- extraction des données utiles contenues dans le paquet (c'est-à-dire, retrait de l'en-tête de transport correspondant généralement aux couches de protocoles suivants RTP, puis UDP pour « User Datagram Protocol », puis IP pour « Internet Protocol')
- sélection d'un type de codage compatible avec les capacités du terminal 33 mémorisées ;
- codage des données utiles du paquet selon le type de codage sélectionné ;
- ajout de l'en-tête de transport ;
- transmission du paquet au terminal récepteur 33.

La transmission des données codées selon le type de codage sélectionné par le serveur vers le terminal participant 33 est référencée 416.

Il est à noter que selon un service de 'push to talk' de l'art antérieur, le serveur ne réalise pas d'adaptation de type de codage et de ce fait les données codées selon le type de codage initial reçues du terminal 31 sont transmises aux terminaux participants 32 et 33 codées selon le type de codage initial. Par conséquent, le terminal participant 33 n'est pas capable de les décoder.

Quand le terminal initiateur émetteur a fini d'émettre, il envoie un message 'release' selon le protocole RTCP référencé 417 pour indiquer qu'il a fini d'émettre. Sur réception de ce message, le serveur 'push to talk' envoie un message 'idle' selon le protocole RTCP à chaque terminal participant, respectivement référencé 418, 419, pour les informer qu'ils peuvent demander une autorisation d'émettre.

Ainsi, lorsqu'un terminal participant, ayant le droit d'émettre, émet des données vers les autres terminaux connectés à la session via le serveur, le serveur opère de la même manière que décrite précédemment pour adapter le type de codage des données transmises.

Dans un mode de réalisation de la présente invention, lorsqu'un nouveau terminal souhaite participer à la session 'push to talk' établie, il envoie un message 'INVITE' selon le protocole SIP au serveur 'push to talk' contenant le ou les types de codage qu'il supporte. Par conséquent, le serveur mémorise les capacités de codage et de décodage de ce nouveau terminal connecté afin d'opérer comme cela a été précédemment décrit lors de transmissions ultérieures de données codées.

Un mode de réalisation de l'invention offre donc avantageusement une architecture de service 'push to talk' simple, très flexible et très adaptative. En effet, elle permet à des terminaux présentant des capacités de codage et de décodage incompatibles d'être pourtant en communication sans avoir à introduire des fonctionnalités au niveau du terminal.

De plus, un mode de réalisation de l'invention est facile à mettre en oeuvre dans un réseau UMTS version 99, 4, 5, 6 et les suivantes par conséquent.

## Revendications

1. Procédé de gestion d'une session en mode talkie walkie (« push to talk ») entre une pluralité de terminaux (31,32,33), ayant chacun des capacités respectives de codage et de décodage de signaux de parole et/ou d'images, ladite session connectant ladite pluralité de terminaux via un serveur (10), au travers d'un premier réseau de télécommunication sans fil (7) auquel sont connectés les terminaux et d'un deuxième réseau (8) auquel est connecté le serveur,
dans lequel le serveur (10) comprend un codeur/décodeur de données, et
dans lequel, après établissement d'une session à la demande de l'un des terminaux:
- un terminal émetteur (31) émet des données codées selon un type de codage initial vers un ou plusieurs autres terminaux (32,33) récepteurs connectés via le serveur (10) ;
- le serveur (10) reçoit lesdites données codées selon ledit type de codage initial ;
- le serveur (10) traite lesdites données en fonction desdites capacités respectives desdits terminaux récepteurs pour assurer une compatibilité entre les données codées selon ledit type de codage initial et les données reçues par les terminaux récepteurs, le cas échéant selon au moins un type de codage différent du type de codage initial ;
- le serveur (10) transmet lesdites données traitées aux terminaux récepteurs.

2. Procédé selon la revendication 1, dans lequel le serveur (10) a en mémoire les capacités respectives de chacun des terminaux (31,32,33) connectés et
dans lequel le serveur traite les données reçues suivant les étapes :
- réception des données codées selon un type de codage initial ;
- contrôle de la compatibilité des capacités respectives des terminaux récepteurs avec le type de codage initial sur la base des capacités mémorisées respectivement pour chacun des terminaux ;
- pour chacun des terminaux récepteurs dont les capacités sont compatibles avec le type de codage initial, transmission des données codées selon le type de codage initial ;
- pour chacun des terminaux récepteurs dont les capacités sont incompatibles avec le type de codage initial, sélection d'un type de codage de données adapté aux capacités du terminal récepteur et codage des données, puis transmission des données codées selon le type de codage sélectionné.

3. Procédé selon la revendication 1 ou 2 dans lequel l'établissement de la session, à la demande d'un terminal initiateur (31) vers un ou plusieurs terminaux (32,33) participants, est réalisé, selon un protocole de signalisation déterminé, par un échange de messages comprenant les capacités respectives de chacun des terminaux connectés ; et
dans lequel le serveur (10), sur réception desdits messages échangés, mémorise lesdites capacités respectives.

4. Procédé selon la revendication 3, dans lequel le protocole de signalisation déterminé est le protocole "Session Initiation Protocol" (SIP), et dans lequel l'établissement d'une session comprend les étapes suivantes :
- le terminal initiateur émet vers le serveur un message 'INVITE' (401) selon le protocole SIP comprenant les capacités de codage et de décodage du terminal initiateur;
- le serveur reçoit ledit message 'INVITE' (401) puis envoie aux terminaux participants un message respectif 'INVITE' (402,403) selon le protocole SIP ;
- le serveur reçoit des message '200 OK' (404,409) selon le protocole SIP respectivement envoyés en réponse par les terminaux participants et comprenant leurs capacités respectives ; puis le serveur transmet au terminal initiateur un desdits messages '200 OK' ;
- le terminal initiateur émet un message de confirmation (407) de réception du message transmis '200 OK' selon le protocole SIP ;
- le serveur transmet au terminal initiateur des messages de notification indiquant les terminaux connectés à la session.

5. Procédé selon l'une quelconque des revendications précédentes, dans lequel en outre on gère des droits d'émettre parmi les terminaux connectés selon un protocole de signalisation déterminé.

6. Procédé selon la revendication 5, dans lequel le protocole de signalisation prédéterminé est le protocole 'Real Time Control Protocol » (RTCP).

7. Procédé selon l'une quelconque des revendications précédentes, dans lequel le codeur/décodeur est un codeur/décodeur 'Adaptive Multi Rate' (AMR) et dans lequel le type de codage correspond à un mode AMR.

8. Procédé selon l'une quelconque des revendications précédentes, dans lequel les capacités respectives de codage et de décodage des terminaux sont échangés au cours de l'établissement de la session selon un protocole de type "Session Description Protocol" (SDP).

9. Procédé selon l'une des revendications précédentes, dans lequel le deuxième réseau (8) utilise un protocole Internet.

10. Serveur (10) pour gérer une session en mode talkie walkie ("push to talk") comprenant des moyens pour mettre en oeuvre un procédé selon l'une quelconque des revendications précédentes.

11. Système de gestion d'une session en mode talkie walkie ("push to talk") comprenant des moyens pour mettre en oeuvre un procédé selon l'une quelconque des revendications 1 à 9.
